# EUROPÄISCHE PATENTANMELDUNG

(11) **EP 4 752 390 A1**
(43) Veröffentlichungstag der Anmeldung: **03.06.2026**
(21) Anmeldenummer: 25219158.0
(22) Anmeldetag: 27.11.2025
(51) Int. Cl.: F16D 1/095, F16B 2/00

(54) **HÜLSENANORDNUNG, BAUTEILANORDNUNG UND VERFAHREN**

(30) Priorität: 29.11.2024 DE 102024135530
(71) Anmelder: APT Advanced Plating Technologies GmbH, 6700 Bludenz (AT)
(72) Erfinder: KURRLE, Matthias, 70186 Stuttgart (DE)
(74) Vertreter: RDL Patentanwälte PartG mbB

(57) **Zusammenfassung**

Eine Hülsenanordnung (10) zur reibungserhöhenden Verbindung von einem ersten Bauteil (81) mit einem zylinderförmigen Abschnitt (810) und einem zweiten Bauteil (82) mit einer zylinderförmigen Aussparung (820) zur Aufnahme des zylinderförmigen Abschnitts (810) des ersten Bauteils (81), wobei die Hülsenanordnung (10) ein erstes axiales Ende (101), ein zweites axiales Ende (102) und einen ersten Schlitz (103) aufweist, wobei der erste Schlitz (103) von dem ersten axialen Ende (101) bis zum zweiten axialen Ende (102) verläuft, wobei die Hülsenanordnung (10) ein Substrat (20) aufweist, wobei die Hülsenanordnung (10) zumindest abschnittsweise als Schichtanordnung (40) mit dem Substrat (20), mit einer ersten Funktionsschicht (41) und mit einer zweiten Funktionsschicht (42) ausgebildet ist, wobei die erste Funktionsschicht (41) auf einer ersten Seite (201) des Substrats (20) und die zweite Funktionsschicht (42) auf einer zur ersten Seite (201) entgegengesetzten zweiten Seite (202) des Substrats (20) angeordnet ist, wobei die erste Funktionsschicht (41) und die zweite Funktionsschicht (42) jeweils eine metallische Bindephase (51, 52) aufweisen, wobei in der metallischen Bindephase (51, 52) Hartstoffpartikel (61, 62) fixiert sind, wobei das Substrat (20) einen ersten Hohlzylinderformabschnitt (200) aufweist.

## Beschreibung

Die Erfindung betrifft eine Hülsenanordnung zur reibungserhöhenden Verbindung, eine Bauteilanordnung mit einer solchen Hülsenanordnung und ein Verfahren zur Erzeugung einer Bauteilanordnung.

Die DE 10 2022 124 577 A1 zeigt eine Schichtanordnung zur reibungserhöhenden Verbindung von zu fügenden Bauteilen.

Die WO 2022 / 157 194 A1 zeigt eine Hohlwellenkupplung zur Verbindung einer Welle mit einer Hohlwelle, wobei an Fügeflächen ein reibungserhöhendes Mittel vorhanden ist.

Die DE 10 2013 113 616 A1 zeigt eine Schichtanordnung zur reibungserhöhenden Verbindung von zu fügenden Bauteilen.

Die DE 10 2019 128 085 A1 zeigt eine Schichtanordnung zur reibungserhöhenden Verbindung von zu fügenden Bauteilen.

Es ist daher eine Aufgabe der Erfindung, eine neue Hülsenanordnung, eine neue Bauteilanordnung mit einer solchen Hülsenanordnung und ein neues Verfahren zur Erzeugung einer Bauteilanordnung bereit zu stellen.

Diese Aufgaben werden gelöst durch den unabhängigen Anspruch und durch die nebengeordneten Ansprüche.

Eine Hülsenanordnung zur reibungserhöhenden Verbindung von einem ersten Bauteil mit einem zylinderförmigen Abschnitt und einem zweiten Bauteil mit einer zylinderförmigen Aussparung zur Aufnahme des zylinderförmigen Abschnitts des ersten Bauteils, wobei die Hülsenanordnung ein erstes axiales Ende, ein zweites axiales Ende und einen ersten Schlitz aufweist, wobei der erste Schlitz von dem ersten axialen Ende bis zum zweiten axialen Ende verläuft, wobei die Hülsenanordnung ein Substrat aufweist, wobei die Hülsenanordnung zumindest abschnittsweise als Schichtanordnung mit dem Substrat, mit einer ersten Funktionsschicht und mit einer zweiten Funktionsschicht ausgebildet ist, wobei die erste Funktionsschicht auf einer ersten Seite des Substrats und die zweite Funktionsschicht auf einer zur ersten Seite entgegengesetzten zweiten Seite des Substrats angeordnet ist, wobei die erste Funktionsschicht und die zweite Funktionsschicht jeweils eine metallische Bindephase aufweisen, wobei in der metallischen Bindephase Hartstoffpartikel fixiert sind, wobei das Substrat einen ersten Hohlzylinderformabschnitt aufweist.

Durch den Hohlzylinderformabschnitt kann sich die Hülsenanordnung gut an das erste Bauteil und an das zweite Bauteil anlegen, und ein großflächiger Kontakt wird ermöglicht.

Gemäß einer bevorzugten Ausführungsform weist das Substrat in dem ersten Hohlzylinderformabschnitt die erste Funktionsschicht mit den ersten Hartstoffpartikeln und die zweite Funktionsschicht mit den zweiten Hartstoffpartikeln auf. Anders ausgedrückt ist im ersten Hohlzylinderformabschnitt die Schichtanordnung vorgesehen. Dies ermöglicht vorteilhaft eine Reibwerterhöhung im Bereich des Hohlzylinderformabschnitts.

Gemäß einer bevorzugten Ausführungsform verläuft der erste Schlitz axial. Hierdurch ist nur in einem geringen Umfangswinkelbereich der erste Schlitz vorhanden, und dies ist vorteilhaft für die Reibwerterhöhung.

Gemäß einer bevorzugten Ausführungsform weist die Hülsenanordnung
- am ersten axialen Ende,
- am zweiten axialen Ende, oder
- am ersten axialen Ende und am zweiten axialen Ende
einen sich zum jeweiligen axialen Ende hin verbreiternden Endabschnitt auf. Dies ermöglicht beispielsweise eine Verringerung der Gefahr eines axialen Verrutschens der Hülsenanordnung während der Montage.

Gemäß einer bevorzugten Ausführungsform ist das Substrat und damit auch die Hülsenanordnung an mindestens einer Kante des ersten Schlitzes nach innen oder nach außen gebogen, um über die mindestens eine Kante eine Positionierung der Hülsenanordnung zu ermöglichen.

Gemäß einer bevorzugten Ausführungsform ist das Substrat zumindest abschnittsweise als metallisches Substrat ausgebildet und weist mindestens einen Werkstoff auf aus einer ersten Werkstoffgruppe bestehend aus:
- Federbandstahl,
- Werkzeugstahl,
- Edelstahl,
- Werkstoffnummer 1.4401 EN,
- Werkstoffnummer 1.4301 EN,
- Werkstoffnummer 1.4404 EN,
- Werkstoffnummer 1.4571 EN,
- Werkstoffnummer 1.1248 (DIN, C 75 S),
- Werkstoffnummer 1.1274 (DIN C 100 S),
- Werkstoffnummer 1.1211 (DIN C 60 S),
- Werkstoffnummer 1.0580 (DIN St 52, AISI 1024),
- Werkstoffnummer 1.0347 gemäß DIN EN 10130,
- Werkstoffnummer 1.0338 gemäß DIN EN 10130:1991,
- Aluminium,
- Aluminiumlegierung,
- Nickellegierung,
- Legierung, welche Nickel als Hauptkomponente und Chrom als Nebenkomponente aufweist,
- Titan, und
- Titanlegierung.

Diese Werkstoffe sind vorteilhaft geeignet für die Verwendung als Substrat.

Gemäß einer bevorzugten Ausführungsform ist das Substrat zumindest abschnittsweise als metallisches Substrat ausgebildet, und es weist eine Bruchdehnung A80 auf, welche größer oder gleich einer ersten Bruchdehnung ist aus einer Bruchdehnungsgruppe bestehend aus:
- 30 %,
- 32 %, und
- 34 %.

Dies ermöglicht eine vorteilhafte Verarbeitung mit einer Formänderung.

Gemäß einer bevorzugten Ausführungsform ist das Substrat zumindest abschnittsweise als organisches Substrat ausgebildet.

Gemäß einer bevorzugten Ausführungsform ist das Substrat zumindest abschnittsweise aus kohlenstofffaserverstärktem Kunststoff oder aus glasfaserverstärktem Kunststoff ausgebildet.

Gemäß einer bevorzugten Ausführungsform weist das Substrat eine Dicke auf, die in einem vorgegebenen ersten Bereich liegt aus einer Bereichsgruppe bestehend aus:
- Bereich von 100 µm bis 4.000 µm,
- Bereich von 200 µm bis 3.000 µm.

Diese Dicken ermöglichen in Abhängigkeit vom Anwendungsfall und den Abmessungen vorteilhafte Verarbeitungsmöglichkeiten.

Gemäß einer bevorzugten Ausführungsform weist der erste Hohlzylinderformabschnitt eine axiale Länge auf, welche in mindestens einem Längenbereich liegt aus einer Längenbereichsgruppe bestehend aus:
- 2 mm bis 20 mm,
- 17 mm bis 50 mm,
- 40 mm bis 150 mm,
- 150 mm bis 500 mm, und
- 500 mm bis 2.500 mm.

Die kleineren axialen Längen sind für feinmechanische Bauteile vorteilhaft, und mit den großen axialen Längen lassen sich Industrieverbindungen bei großen Bauteilen herstellen.

Gemäß einer bevorzugten Ausführungsform weist die metallische Bindephase mindestens einen Werkstoff auf, der ausgewählt ist aus einer zweiten Werkstoffgruppe bestehend aus:
- Nickel,
- Nickellegierung,
- Kupfer,
- Kupferlegierung,
- Cobalt,
- Cobaltlegierung,
- Chrom,
- Chromlegierung,
- Zink,
- Zinklegierung,
- Legierung auf Kuper-Zinn-Basis,
- Legierung auf Nickel-Phosphor-Basis, und
- Legierung auf Nickel-Zinn-Basis.

Diese Werkstoffe eignen sich gut zum Halten der Hartstoffpartikel.

Gemäß einer bevorzugten Ausführungsform weisen die Hartstoffpartikel mindestens einen Hartstoff auf, der ausgewählt ist aus einer Hartstoffgruppe bestehend aus:
- Diamant,
- kubisches Bornitrid,
- Siliciumnitrid,
- Borcarbid,
- Wolframcarbid,
- Siliciumcarbid,
- Titanborid, und
- Aluminiumoxid.

Mit diesen Hartstoffpartikeln lässt sich gut eine Erhöhung des Reibwerts erzielen.

Gemäß einer bevorzugten Ausführungsform weisen die Hartstoffpartikel eine mittlere Größe auf, die in mindestens einem vorgegebenen ersten Bereich liegt aus einer Bereichsgruppe bestehend aus:
- Bereich von 0,5 µm bis 90 µm,
- Bereich von 2,0 µm bis 70 µm, und
- Bereich von 5 µm bis 60 µm.

Diese Bereiche sind für unterschiedliche Größen der Bauteile vorteilhaft. Die kleineren mittleren Größen sind für feinmechanische Bauteile vorteilhaft, und die großen Größen in besondere auch für größere Bauteile.

Gemäß einer bevorzugten Ausführungsform sind in der ersten Funktionsschicht und in der zweiten Funktionsschicht die gleichen Hartstoffpartikel vorgesehen. Dies erleichtert die Herstellung in einem galvanischen Bad.

Gemäß einer bevorzugten Ausführungsform weist das Substrat und damit auch die Hülsenanordnung zwei Durchgangsaussparungen auf, um ein Greifen der Hülsenanordnung über ein in die Durchgangsaussparungen eingreifendes Werkzeug zu ermöglichen. Die Hülsenanordnung lässt sich hierdurch gut greifen und ggf. auch maschinell handhaben.

Gemäß einer bevorzugten Ausführungsform weist die Hülsenanordnung im Bereich des ersten Hohlzylinderformabschnitts einen Innendurchmesser auf, welcher in mindestens einem vorgegebenen Innendurchmesserbereich liegt aus einer Innendurchmesserbereichsgruppe bestehend aus:
- 0,7 mm bis 5,0 mm,
- 5,0 mm bis 10 mm,
- 10 mm bis 70 mm, und
- 70 mm und größer.

Die kleinen Innendurchmesser können beispielsweise in Uhren oder kleinen Elektromotoren verwendet werden. Die größeren Durchmesser sind beispielsweise geeignet im Bereich von Fahrzeugen und Fahrrädern.

Gemäß einer bevorzugten Ausführungsform weist das Substrat und damit auch die Hülsenanordnung einen zweiten Hohlzylinderformabschnitt auf, dessen Innendurchmesser größer ist als der Innendurchmesser des ersten Hohlzylinderabschnitts. Dies ermöglicht eine axiale Sicherung der Hülsenanordnung in mindestens eine der axialen Richtungen.

Gemäß einer bevorzugten Ausführungsform weist das Substrat und damit auch die Hülsenanordnung einen dritten Hohlzylinderformabschnitt auf, dessen Innendurchmesser kleiner ist als der Innendurchmesser des ersten Hohlzylinderabschnitts. Dies ermöglicht eine axiale Sicherung der Hülsenanordnung in mindestens eine der axialen Richtungen.
deiner ist als der Innendurchmesser des ersten Hohlzylinderabschnitts.

Gemäß einer bevorzugten Ausführungsform weist das Substrat und damit auch die Hülsenanordnung einen Fasenabschnitt mit einem ersten Fasenabschnittsende und einem zweiten Fasenabschnittsende auf, wobei der Innendurchmesser des Substrats vom ersten Fasenabschnittsende zum zweiten Fasenabschnittsende hin zunimmt. Die Beschichtung eines solchen Fasenabschnitts funktioniert besser als bei einer radial verlaufenden Stufe.

Eine Bauteilanordnung weist ein erstes Bauteil, ein zweites Bauteil und eine solche Hülsenanordnung auf, wobei das erste Bauteil einen zylinderförmigen Abschnitt aufweist, wobei das zweite Bauteil eine zylinderförmige Aussparung zur Aufnahme des zylinderförmigen Abschnitts des ersten Bauteils aufweist, wobei der zylinderförmige Abschnitt in der zylinderförmigen Aussparung angeordnet ist, und wobei die Hülsenanordnung zwischen dem zylinderförmigen Abschnitt und dem zweiten Bauteil angeordnet ist. Dies ermöglicht einen hohen Reibwert zwischen den Bauteilen.

Gemäß einer bevorzugten Ausführungsform weist der erste Schlitz mindestens eine Breite auf aus einer Breitengruppe bestehend aus:
- Breite von mindestens 100 µm,
- Breite von mindestens 500 µm,
- Breite von mindestens 1.000 µm, und
- Breite von mindestens 1.500 µm.

Dies ermöglicht ein gutes Handling der Hülsenanordnung, und bevorzugt wird eine Überlappung der Enden im Schlitzbereich vermieden.

Gemäß einer bevorzugten Ausführungsform ist das zweite Bauteil dazu ausgebildet, eine Klemmverbindung mit dem ersten Bauteil auszubilden. Dies ergibt eine hohe Normalkraft zwischen dem ersten Bauteil und dem zweiten Bauteil, und die Hülsenanordnung kann positiv reibwerterhöhend wirken.

Gemäß einer bevorzugten Ausführungsform weist das zweite Bauteil einen zweiten Schlitz und mindestens eine Schraubverbindung auf, wobei die Schraubverbindung dazu ausgebildet ist, den zweiten Schlitz zu verringern, um hierdurch eine Klemmverbindung zwischen dem zweiten Bauteil und dem ersten Bauteil herzustellen. Die Normalkraft ist vorteilhaft für die Bauteilanordnung.

Gemäß einer bevorzugten Ausführungsform ist die Hülsenanordnung dazu ausgebildet, mindestens eine Relativbewegung zwischen dem ersten Bauteil und dem zweiten Bauteil zu verhindern, wobei die mindestens eine Relativbewegung ausgewählt ist aus einer Relativbewegungsgruppe bestehend aus:
- Verdrehen des ersten Bauteils relativ zum zweiten Bauteil bei einem Drehmoment, welches kleiner ist als ein vorgegebenes maximales Drehmoment, und
- axiale Verschiebung des zylindrischen Abschnitts des ersten Bauteils relativ zum zweiten Bauteil bei einer axialen Kraft, welche geringer ist als eine vorgegebene maximale axiale Kraft.

Dies ermöglicht eine gute Kraftübertragung bzw. Drehmomentübertragung.

Gemäß einer bevorzugten Ausführungsform weisen
- das erste Bauteil,
- das zweite Bauteil, oder
- das erste Bauteil und das zweite Bauteil
mindestens einen ersten Werkstoff auf aus einer dritten Werkstoffgruppe bestehend aus:
- metallischer Werkstoff,
- organischer Werkstoff,
- kohlenstofffaserverstärkter Kunststoff, und
- glasfaserverstärkter Kunststoff.

Bei diesen Werkstoffen kann die Hülsenanordnung vorteilhaft wirken.

Ein Verfahren zur Erzeugung einer Bauteilanordnung mit einem ersten Bauteil, einem zweiten Bauteil und einer solchen Hülsenanordnung, wobei das erste Bauteil einen zylinderförmigen Abschnitt aufweist und wobei das zweite Bauteil eine zylinderförmige Aussparung zur Aufnahme des zylinderförmigen Abschnitts aufweist, wobei das zweite Bauteil dazu ausgebildet ist, eine Veränderung der zylinderförmigen Aussparung zwischen einem erweiterten Zustand und einem verengten Zustand zu ermöglichen, und wobei das Verfahren folgende Schritte aufweist:
A) Die Hülsenanordnung wird im erweiterten Zustand des zweiten Bauteils zwischen dem ersten Bauteil und dem zweiten Bauteil positioniert; und
B) das zweite Bauteil wird in den verengten Zustand überführt, und hierdurch wird eine Klemmverbindung zwischen dem zweiten Bauteil und dem ersten Bauteil erzeugt, wobei die Hülsenanordnung zumindest abschnittsweise zwischen dem zylinderförmigen Abschnitt und der zylinderförmigen Aussparung angeordnet ist. Dies ermöglicht eine vorteilhafte Montage.

Gemäß einer bevorzugten Ausführungsform wird im Schritt A) die Hülsenanordnung in die zylinderförmige Aussparung eingelegt, und anschließend wird der zylinderförmige Abschnitt in die Hülsenanordnung und in die zylinderförmige Aussparung eingeführt. Dies ist beispielsweise vorteilhaft, wenn die Hülsenanordnung schwer definiert relativ zum zylinderförmigen Abschnitt positionierbar ist.

Gemäß einer bevorzugten Ausführungsform wird im Schritt A) die Hülsenanordnung auf dem zylinderförmigen Abschnitt positioniert, und anschließend wird der zylinderförmige Abschnitt mit der Hülsenanordnung in die zylinderförmige Aussparung eingeführt wird. Dies ist beispielsweise vorteilhaft, wenn die zylinderförmige Aussparung schwer zugänglich ist.

Gemäß einer bevorzugten Ausführungsform weist das zweite Bauteil mindestens einen zweiten Schlitz auf, wobei das zweite Bauteil dazu ausgebildet ist, durch Vergrößerung der Breite des zweiten Schlitzes in den erweiterten Zustand überzugehen und durch Verringerung der Breite des zweiten Schlitzes in den verengten Zustand überzugehen, wobei im Schritt B) die Breite des zweiten Schlitzes verringert wird. Hierdurch wird eine einfache Montage ermöglicht.

Gemäß einer bevorzugten Ausführungsform weist das zweite Bauteil eine Schraubverbindung auf, wobei die Schraubverbindung dazu ausgebildet ist, durch Betätigung der Schraubverbindung die Breite des zweiten Schlitzes zu verringern, und wobei im Schritt B) die Breite des zweiten Schlitzes durch Betätigung der Schraubverbindung verringert wird. Hierdurch kann ein vergleichsweise hoher Normaldruck zwischen den Bauteilen erzielt werden, und dies ermöglicht vorteilhaft eine Reibwerterhöhung mit der Hülsenanordnung.

Weitere Einzelheiten und vorteilhafte Weiterbildungen der Erfindung ergeben sich aus den im Folgenden beschriebenen und in den Zeichnung dargestellten, in keiner Weise als Einschränkung der Erfindung zu verstehenden Ausführungsbeispielen sowie aus den Unteransprüchen. Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Es zeigt:
- Fig. 1: in einer raumbildlichen Darstellung eine erste Ausführungsform einer Hülsenanordnung,
- Fig. 2: in einem Längsschnitt die Hülsenanordnung von Fig. 1,
- Fig. 3: in einer Draufsicht die Hülsenanordnung von Fig. 1,
- Fig. 4: ein Detail IV von Fig. 1,
- Fig. 5: ein Detail V von Fig. 3,
- Fig. 6: in einem Querschnitt eine Schichtanordnung für die Hülsenanordnung von Fig. 1,
- Fig. 7: in einer raumbildlichen Darstellung eine Bauteilanordnung mit zwei Bauteilen und einer Hülsenanordnung im nicht montierten Zustand,
- Fig. 8: in einer raumbildlichen Darstellung die Bauteilanordnung von Fig. 7 im montierten Zustand,
- Fig. 9: in einem Querschnitt eine Bauteilanordnung mit einer weiteren Ausführungsform der Hülsenanordnung von Fig. 1, und
- Fig. 10: in einem Längsschnitt eine weitere Ausführungsform der Hülsenanordnung von Fig. 1.

Im Folgenden sind gleiche oder gleich wirkende Teile mit den gleichen Bezugszeichen versehen und werden üblicherweise nur einmal beschrieben. Die Beschreibung ist figurenübergreifend aufeinander aufbauend, um unnötige Wiederholungen zu vermeiden.

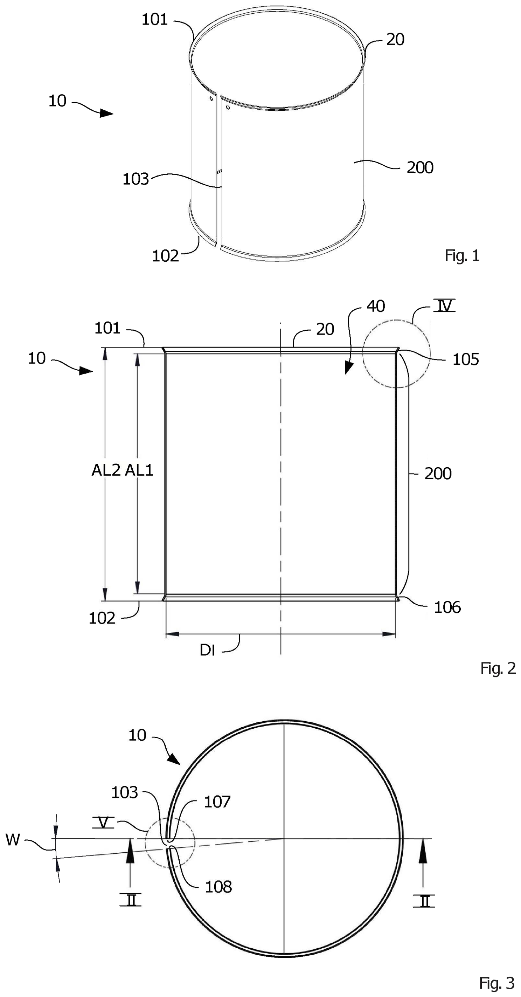

**Fig. 1** zeigt in einer raumbildlichen Darstellung eine erste Ausführungsform einer Hülsenanordnung 10, **Fig. 2** zeigt die Hülsenanordnung 10 in einem Längsschnitt entlang der Schnittlinie II - II von Fig. 3, und **Fig. 3** zeigt die Hülsenanordnung 10 in einer Draufsicht.

Die Hülsenanordnung 10 hat ein erstes axiales Ende 101, ein zweites axiales Ende 102 und einen Schlitz 103.

Der Schlitz 103 verläuft von dem ersten axialen Ende 101 bis zum zweiten axialen Ende 102.

Bevorzugt verläuft der Schlitz 103 axial, er kann aber auch schräg verlaufen.

Die Hülsenanordnung 10 hat einen Hohlzylinderformabschnitt 200.

Der Schlitz 103 wird von einer Kante 107 und von einer Kante 108 der Hülsenanordnung 10 begrenzt.

Der Hohlzylinderformabschnitt 200 hat eine axiale Länge AL1, und die Hülsenanordnung 10 hat eine axiale Länge AL2.

Der Hohlzylinderabschnitt 200 hat einen Innendurchmesser DI.

Der Schlitz 103 hat einen Öffnungswinkel W, der bevorzugt im nicht montierten Zustand in einem Bereich zwischen 1° und 10° liegt, weiter bevorzugt in einem Bereich zwischen 2° und 8°.

Die Hülsenanordnung 10 hat bevorzugt am ersten axialen Ende 101 einen sich zum axialen Ende 101 hin verbreiternden Endabschnitt 105 und am zweiten axialen Ende 102 einen sich zum axialen Ende 102 hin verbreiternden Endabschnitt 106. Die Endabschnitte 105, 106 ermöglichen jeweils eine axiale Positionierung der Hülsenanordnung 10.

Die Hülsenanordnung 10 hat ein Substrat 20, welches die Grundform der Hülsenanordnung 10 definiert.

Die Hülsenanordnung 10 hat zumindest bereichsweise eine Schichtanordnung 40, bei der das Substrat 20 mit mindestens einer zusätzlichen Schicht versehen ist.

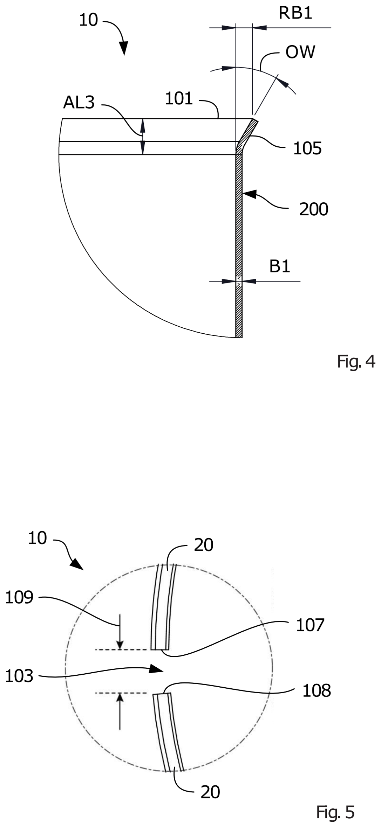

**Fig. 4** zeigt ein vergrößertes Detail IV von Fig. 1.

Der sich verbreiternde Endabschnitt 105 hat zumindest abschnittsweise einen Öffnungswinkel OW, der bevorzugt im Bereich 10° bis 70° liegt, weiter bevorzugt im Bereich zwischen 20° und 60°.

Die Erstreckung RB1 des Endabschnitts in radiale Richtung ist eingezeichnet.

Die axiale Länge des Endabschnitts 105 ist mit AL3 bezeichnet.

Die Breite der Hülsenanordnung 10 ist mit B1 bezeichnet.

**Fig. 5** zeigt ein vergrößertes Detail V von Fig. 3.

Die Breite 109 des Schlitzes 103 ist eingezeichnet.

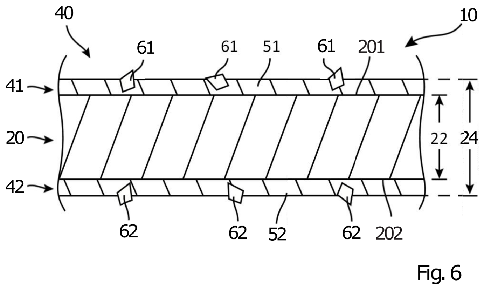

**Fig. 6** zeigt die Schichtanordnung 40, die bevorzugt im Hohlzylinderformabschnitt 200 vorgesehen ist aber auch in den übrigen Bereichen der Hülsenanordnung 10 vorgesehen sein kann.

Die Schichtanordnung 40 weist das Substrat 20 mit einer ersten Seite 201 und mit einer zur ersten Seite 201 entgegengesetzten zweiten Seite 202 auf.

Die erste Seite 201 und die zweite Seite 202 sind jeweils mit einer Funktionsschicht 41 bzw. 42 versehen.
und mit von den Funktionsschichten 41, 42 gehaltenen, schematisch angedeuteten Hartstoffpartikeln 61, 62 versehen.

Die Funktionsschichten 41, 42 weisen jeweils eine metallische Bindephase 51, 52 auf, in welcher Hartstoffpartikel 61, 62 fixiert sind. Die Hartstoffpartikel 61, 62 werden somit von der zugehörigen Bindephase 51, 52 gehalten.

Die Hartstoffpartikel 61, 62 stehen zumindest teilweise abschnittsweise aus der zugeordneten Bindephase 51 bzw. 52 hervor.

Das Substrat 20 ist bevorzugt zumindest abschnittsweise als metallisches Substrat 20 ausgebildet.

Das Substrat 20 weist bevorzugt zumindest abschnittsweise mindestens einen Werkstoff auf aus einer Werkstoffgruppe bestehend aus:
- Federbandstahl,
- Werkzeugstahl,
- Edelstahl,
- Werkstoffnummer 1.4401 EN,
- Werkstoffnummer 1.4301 EN,
- Werkstoffnummer 1.4404 EN,
- Werkstoffnummer 1.4571 EN,
- Werkstoffnummer 1.1248 (DIN, C 75 S),
- Werkstoffnummer 1.1274 (DIN C 100 S),
- Werkstoffnummer 1.1211 (DIN C 60 S),
- Werkstoffnummer 1.0580 (DIN St 52, AISI 1024),
- Werkstoffnummer 1.0347 gemäß DIN EN 10130,
- Werkstoffnummer 1.0338 gemäß DIN EN 10130:1991,
- Aluminium,
- Aluminiumlegierung,
- Nickellegierung,
- Legierung, welche Nickel als Hauptkomponente und Chrom als Nebenkomponente aufweist, erhältlich unter der Bezeichnung Inconel,
- Titan, und
- Titanlegierung.

Insbesondere Federbandstahl hat sich bei der Verarbeitung als vorteilhaft erwiesen, da es gerollt und gebogen werden kann.

Das Substrat 20 ist bevorzugt zumindest abschnittsweise als metallisches Substrat ausgebildet und weist eine Bruchdehnung A₈₀ auf, welche größer oder gleich einer ersten Bruchdehnung ist aus einer Bruchdehnungsgruppe bestehend aus:
- 30 %,
- 32 %, und
- 34 %.

Bei der Messung der Bruchdehnung A₈₀ wird eine Flachprobe des entsprechenden metallischen Werkstoffs verwendet. Der bei Raumtemperatur durchgeführt Versuch ist definiert bei DIN ISO 6892-1.

Die Bruchdehnung A₈₀ ist ein Maß für die Duktilität und damit für die Fließfähigkeit oder Umformbarkeit eines Werkstoffs.

Das Substrat 20 kann auch zumindest abschnittsweise als organisches Substrat 20 ausgebildet sein.

Hierbei kann bevorzugt ein kohlenstofffaserverstärktem Kunststoff oder ein glasfaserverstärkter Kunststoff verwendet werden.

Bevorzugt hat das Substrat 20 eine Dicke 22, die in einem vorgegebenen Bereich liegt aus einer Bereichsgruppe bestehend aus:
- Bereich von 100 µm bis 4.000 µm,
- Bereich von 200 µm bis 3.000 µm.

Das Substrat 20 sollte zu einer gewissen Formbeständigkeit der Hülsenanordnung 10 führen aber zum Einsparen von Material und Masse trotzdem möglichst dünn sein. Bei sehr kleinen Hülsenanordnungen sind Dicken von beispielsweise 200 µm vorteilhaft, bei großen Hülsenanordnungen dagegen größere Dicken.

Die metallische Bindephasen 51, 52 weisen bevorzugt mindestens einen Werkstoff auf, der ausgewählt ist aus einer Werkstoffgruppe bestehend aus:
- Nickel,
- Nickellegierung,
- Kupfer,
- Kupferlegierung,
- Cobalt,
- Cobaltlegierung,
- Chrom,
- Chromlegierung,
- Zink,
- Zinklegierung,
- Legierung auf Kuper-Zinn-Basis,
- Legierung auf Nickel-Phosphor-Basis, und
- Legierung auf Nickel-Zinn-Basis.

Diese Werkstoffe sind gut geeignet zum Halten der Hartstoffpartikel 61, 62.

Bevorzugt weisen die erste Funktionsschicht 41 und die zweite Funktionsschicht 42 die gleichen metallischen Bindephasen 51, 52 auf. Dies kann beispielsweise durch eine gleichzeitige Beschichtung erreicht werden. Durch das Vorsehen der gleichen metallischen Bindephasen 51, 52 wird die Gefahr der Entstehung eines galvanischen Stroms zwischen den metallischen Bindephasen 51, 52 verringert.

Die Hartstoffpartikel 61, 62 weisen bevorzugt mindestens einen Hartstoff auf, der ausgewählt ist aus einer Hartstoffgruppe bestehend aus:
- Diamant,
- kubisches Bornitrid,
- Siliciumnitrid,
- Borcarbid,
- Wolframcarbid,
- Siliciumcarbid,
- Titanborid, und
- Aluminiumoxid.

Diese Hartstoffe haben eine große Härte und eignen sich gut für die Ausbildung reibwerterhöhender Verbindungen.

Die Hartstoffpartikel 61, 62 haben bevorzugt eine mittlere Größe (Korngröße), die in mindestens einem vorgegebenen Bereich liegt aus einer Bereichsgruppe bestehend aus:
- Bereich von 0,5 µm bis 90 µm,
- Bereich von 2,0 µm bis 70 µm, und
- Bereich von 5 µm bis 60 µm.

Die mittlere Größe von Hartstoffpartikeln wird üblicherweise als d₅₀ angegeben und auch als Median bezeichnet. Dies bedeutet, dass von den Hartstoffpartikeln ein Volumenanteil von 50 % kleiner als d₅₀ und ein Volumenanteil von 50 % größer als d₅₀ ist. Zusätzlich wird üblicherweise eine Mediantoleranz angegeben, beispielsweise 1,35 µm bis 1,49 µm.

Die angegebenen Bereiche ermöglichen eine reibwerterhöhende Verbindung von Bauteilen aus unterschiedlichen Werkstoffen.

Bevorzugt sind in der ersten Funktionsschicht 41 und in der zweiten Funktionsschicht 42 die gleichen Hartstoffpartikel 61, 62 vorgesehen. Dies kann beispielsweise durch eine gleichzeitige Beschichtung der beiden Funktionsschichten 41, 42 erfolgen.

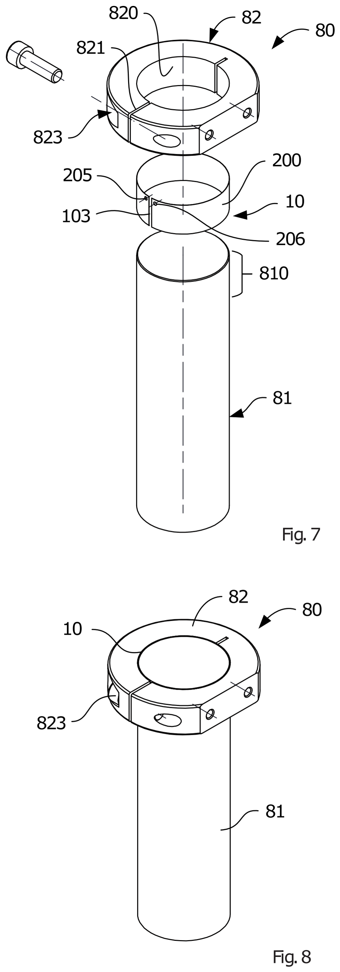

**Fig. 7** zeigt eine Bauteilanordnung 80 mit einem Bauteil 81, einem Bauteil 82 und der Hülsenanordnung 10.

Die Bauteile 81, 82 sind im nicht montierten Zustand,

Das Bauteil 81 hat einen zylinderförmigen Abschnitt 810.

Das Bauteil 82 hat eine zylinderförmige Aussparung 820 zur Aufnahme des zylinderförmigen Abschnitts 810 des ersten Bauteils 81.

Das Bauteil 82 ist dazu ausgebildet, eine Klemmverbindung mit dem Bauteil 81 auszubilden.

Das Bauteil 82 hat einen Schlitz 821 und eine Schraubverbindung 823. Die Schraubverbindung 823 ist dazu ausgebildet, den Schlitz 821 zu verringern, um hierdurch eine Klemmverbindung zwischen dem Bauteil 82 und dem Bauteil 81 herzustellen.

Bevorzugt weisen das Bauteil 81 und/oder das Bauteil 82 mindestens einen Werkstoff auf aus einer Werkstoffgruppe bestehend aus:
- metallischer Werkstoff,
- organischer Werkstoff,
- kohlenstofffaserverstärkter Kunststoff, und
- glasfaserverstärkter Kunststoff.

Im Ausführungsbeispiel hat das Substrat 20 zwei Durchgangsaussparungen 205, 206, um ein Greifen der Hülsenanordnung 10 über ein in die Durchgangsaussparungen 205, 206 eingreifendes Werkzeug zu ermöglichen.

Als Werkzeug kann beispielsweise eine Seegerring-Zange verwendet werden.

Die Durchgangsaussparungen sind bevorzugt auf beiden Seiten des Schlitzes 103, um ein Aufweiten oder Zudrücken des Schlitzes 103 mit Hilfe der Durchgangsaussparungen 205 zu ermöglichen.

**Fig. 8** zeigt die Bauteilanordnung 80 von Fig. 7 im montierten Zustand.

Der zylinderförmige Abschnitt 810 ist in der zylinderförmigen Aussparung 820 angeordnet, und die Hülsenanordnung 10 ist zwischen dem zylinderförmigen Abschnitt 810 und dem Bauteil 82 angeordnet.

Die Hülsenanordnung 10 ist dazu ausgebildet, mindestens eine Relativbewegung zwischen dem Bauteil 81 und dem Bauteil 82 zu verhindern. Die mindestens eine Relativbewegung ist ausgewählt aus einer Relativbewegungsgruppe bestehend aus:
- Verdrehen des Bauteils 81 relativ zum zweiten Bauteil 82 bei einem Drehmoment, welches kleiner ist als ein vorgegebenes maximales Drehmoment, und
- axiale Verschiebung des zylindrischen Abschnitts 810 des ersten Bauteils 81 relativ zum zweiten Bauteil 82 bei einer axialen Kraft, welche geringer ist als eine vorgegebene maximale axiale Kraft.

Durch die Hülsenanordnung 10 kann eine Reibwerterhöhung zwischen den Bauteilen 81 und 82 erzielt werden. Das maximal übertragbare Drehmoment kann durch die Hülsenanordnung 10 deutlich erhöht werden, indem die Hülsenanordnung 10 an den Fügeflächen die Hartstoffpartikel 61, 62 aufweisen. Diese Hartstoffpartikel 61, 62 führen zu einer Mikroverzahnung, und die Grenz-Kräfte bzw. Grenz-Drehmomente, bei denen ein Durchrutschen, also eine Relativbewegung zwischen den Bauteilen 81, 82 auftritt, werden erhöht.

Die Hülsenanordnung 10 kann auch als Verbindungselement, als reibwerterhöhende Hülsenanordnung oder als reibwerterhöhende Hülse (englisch: friction sleeve) bezeichnet werden, und sie kann in Abhängigkeit vom Anwendungsfall mit unterschiedlichen Konturen hergestellt werden.

Der Hohlzylinderformabschnitt 200 hat bevorzugt eine axiale Länge AL1 (vgl. Fig. 2), welche in mindestens einem Längenbereich liegt aus einer Längenbereichsgruppe bestehend aus:
- 2 mm bis 20 mm,
- 17 mm bis 50 mm,
- 40 mm bis 150 mm,
- 150 mm bis 500 mm, und
- 500 mm bis 2.500 mm.

Der Längenbereich von 2 mm bis 20 mm ist insbesondere geeignet für feinmechanische Anwendungen, beispielsweise eine Welle/Nabe-Verbindung eines kleinen Elektromotors.

Der Längenbereich von 17 mm bis 50 mm ist für größere mechanische Anwendungen geeignet, beispielsweise für die Welle/Nabe-Verbindung eines Lüfters oder eine Verbindung zwischen einer Stange und einem Klemmelement bei einem Fahrrad.

Der Längenbereich von 40 mm bis 150 mm ist für noch größere mechanische Anwendungen geeignet, beispielsweise für Landfahrzeuge, Luftfahrzeuge und Wasserfahrzeuge.

Der Längenbereich von 150 mm bis 500 mm ist beispielsweise geeignet für große Baumaschinen und ermöglicht eine sichere Verbindung zwischen Bauteilen 81 und 82.

Der Längenbereich von 500 mm bis 2.500 mm ist beispielsweise geeignet für Verbindungen in großen Wasserfahrzeugen wie Fähren und Passagierschiffen.

Der Schlitz 103 weist bevorzugt mindestens eine Breite 109 (vgl. Fig. 5) auf aus einer Breitengruppe bestehend aus:
- Breite von mindestens 100 µm,
- Breite von mindestens 500 µm,
- Breite von mindestens 1.000 µm, und
- Breite von mindestens 1.500 µm.

Bei einer Breite 109 von weniger als 100 µm besteht die Gefahr, dass die Kanten 107, 108 (vgl. Fig. 5) in Kontakt kommen. Hierdurch könnte eine Verschiebung der Hülsenanordnung relativ zu den Bauteilen 81, 82 erfolgen, und dies würde eine Entstehung linienförmiger Rillen in den Bauteilen 81, 82 bewirken, die zu einer Verringerung der Reibwerterhöhung führen. Eine Mindestbreite von 100 µm hat sich daher als vorteilhaft erwiesen.

Eine Breite 109 von maximal 2 cm ist üblicherweise auch bei großen Bauteilen 81, 82 ausreichend, es sind aber auch größere Breiten 109 möglich.

Die Hülsenanordnung 10 hat im Bereich des ersten Hohlzylinderformabschnitts 200 bevorzugt einen Innendurchmesser DI (vgl. Fig. 2), welcher in mindestens einem vorgegebenen Innendurchmesserbereich liegt aus einer Innendurchmesserbereichsgruppe bestehend aus:
- 0,7 mm bis 5,0 mm,
- 5,0 mm bis 10 mm,
- 10 mm bis 70 mm, und
- 70 mm und größer.

Der Innendurchmesserbereich von 0,7 mm bis 5,0 mm ist besonders gut für feinmechanische Verbindungen geeignet, beispielsweise bei Mikromotoren oder in mechanischen Uhren.

Der Innendurchmesserbereich von 5,0 mm bis 10 mm ist für größere Verbindungen wie beispielsweise bei einer Welle/Nabe-Verbindung eines Lüfters geeignet.

Der Innendurchmesserbereich von 10 mm bis 70 mm ist beispielsweise geeignet für Verbindungen bei Fahrrädern oder Motorrädern.

Der Innendurchmesserbereich von 70 mm und größer ist insbesondere geeignet für große Baumaschinen und Luftfahrzeuge, Landfahrzeuge und Wasserfahrzeuge.

### Herstellung der Bauteilanordnung

Bei einem Verfahren zur Erzeugung der Bauteilanordnung 80 mit dem Bauteil 81, dem Bauteil 82 und der Hülsenanordnung 10 werden folgende Schritte durchgeführt:
A) Die Hülsenanordnung 10 wird im erweiterten Zustand des Bauteils 82 zwischen dem Bauteil 81 und dem Bauteil 82 positioniert, und
B) das Bauteil 82 wird in den verengten Zustand überführt, und hierdurch wird eine Klemmverbindung zwischen dem Bauteil 82 und dem Bauteil 81 erzeugt, wobei die Hülsenanordnung 10 zumindest abschnittsweise zwischen dem zylinderförmigen Abschnitt 810 und der zylinderförmigen Aussparung 820 angeordnet ist.

Die Klemmverbindung führt gleichzeitig zu einem Eindringen der Hartstoffpartikel 61, 62 in die Bauteile 81 und 82, und die Bauteile 81, 82 werden über die Hülsenanordnung 10 miteinander verzahnt.

Bevorzugt wird im Schritt A) die Hülsenanordnung 10 in die zylinderförmige Aussparung 820 eingelegt, und anschließend wird der zylinderförmige Abschnitt 810 in die Hülsenanordnung 10 und in die zylinderförmige Aussparung 820 eingeführt. Dies ist insbesondere vorteilhaft bei einem gut zugänglichen Bauteil 82, und das Bauteil 81 kann gut in das Bauteil 82 und in die Hülsenanordnung 10 eingeschoben werden.

Alternativ wird im Schritt A) die Hülsenanordnung 10 auf dem zylinderförmigen Abschnitt 810 positioniert, und anschließend wird der zylinderförmige Abschnitt 810 mit der Hülsenanordnung 10 in die zylinderförmige Aussparung 820 eingeführt. Dies ist insbesondere vorteilhaft bei kleineren Bauteilen 81, die leicht bewegt werden können und damit zusammen mit der Hülsenanordnung 10 in das Bauteil 82 eingeschoben werden können.

Bevorzugt weist das Bauteil 82 den Schlitz 821 auf, und das Bauteil 82 ist dazu ausgebildet, durch Vergrößerung der Breite des Schlitzes 821 in den erweiterten Zustand überzugehen und durch Verringerung der Breite des Schlitzes 821 in den verengten Zustand überzugehen. Hierbei wird im Schritt B) die Breite des zweiten Schlitzes 821 verringert, und dies erzeugt die Klemmwirkung.

Bevorzugt weist das Bauteil 82 die Schraubverbindung 823 auf, und die Schraubverbindung 823 ist dazu ausgebildet, durch Betätigung der Schraubverbindung 823 die Breite des Schlitzes 821 zu verringern. Im Schritt B) wird die Breite des Schlitzes 821 durch Betätigung der Schraubverbindung 823 verringert.

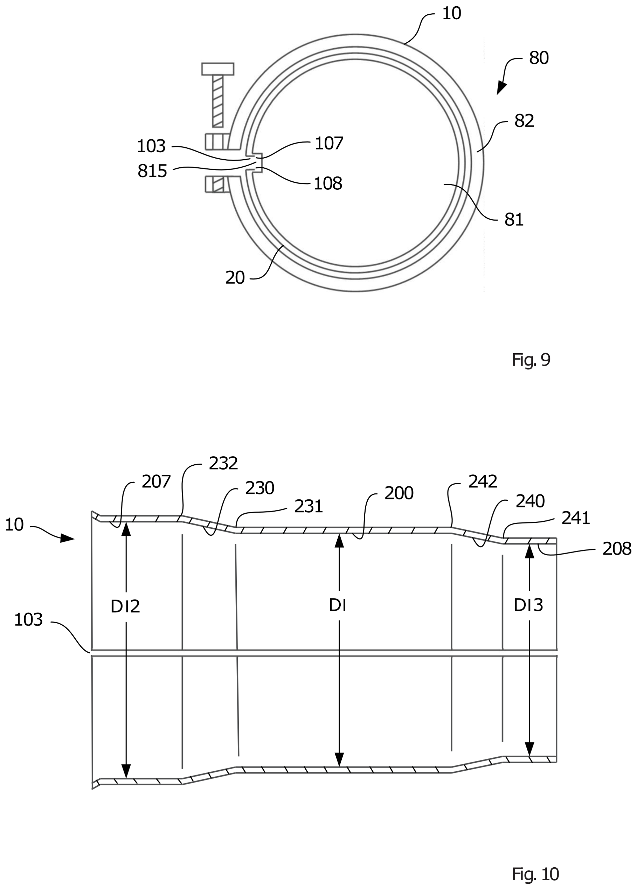

**Fig. 9** zeigt eine Bauteilanordnung 80 mit einem Bauteil 81, einem Bauteil 82 und einer weiteren Ausführungsform der Hülsenanordnung 10.

Das Substrat 20 der Hülsenanordnung 10 ist an den Kanten 107, 108 des Schlitzes 103 nach innen gebogen. Hierdurch ist eine Positionierung der Hülsenanordnung 10 möglich, da eine Verdrehung der Hülsenanordnung 10 relativ zum Bauteil 81 begrenzt ist. Im Ausführungsbeispiel hat das Bauteil 81 eine Nut 815, in welche die Kanten 107, 108 eingreifen.

Alternativ kann das Substrat 20 im Bereich der Kanten 107, 108 nach außen gebogen sein, um über die Kanten 107, 108 eine Positionierung der Hülsenanordnung 10 zu ermöglichen. Bevorzugt weist das Bauteil 82 in diesem Fall eine Aussparung auf, in die die Kanten 107, 108 eingreifen können.

**Fig. 10** zeigt eine weitere Ausführungsform der Hülsenanordnung 10.

Die Hülsenanordnung 10 hat den Hohlzylinderabschnitt 200.

Zusätzlich hat die Hülsenanordnung 10 einen Hohlzylinderformabschnitt 207, dessen Innendurchmesser DI2 größer ist als der Innendurchmesser DI des Hohlzylinderabschnitts 200.

Das Substrat 20 weist einen Hohlzylinderformabschnitt 208 auf, dessen Innendurchmesser DI3 kleiner ist als der Innendurchmesser DI des Hohlzylinderabschnitts 200.

Das Substrat 20 hat einen Fasenabschnitt 230 mit einem ersten Fasenabschnittsende 231 und einem zweiten Fasenabschnittsende 232, wobei der Innendurchmesser des Substrats 20 vom ersten Fasenabschnittsende 231 zum zweiten Fasenabschnittsende 232 hin zunimmt.

Das Substrat 20 hat einen Fasenabschnitt 240 mit einem ersten Fasenabschnittsende 241 und einem zweiten Fasenabschnittsende 242, wobei der Innendurchmesser des Substrats 20 vom ersten Fasenabschnittsende 241 zum zweiten Fasenabschnittsende 242 hin zunimmt.

Über die Fasenabschnitte 230, 240 kann vorteilhaft ein Übergang zwischen den Hohlzylinderabschnitten 200, 207 bzw. 200, 208 erzielt werden. Gleichzeitig ermöglichen die Fasenabschnitte 230, 240 eine axiale Positionierung auf einem Bauteil 81, welches ebenfalls korrespondierende Fasenabschnitte aufweist.

### Herstellung der Hülsenanordnungen

Die Herstellung der unterschiedlichen Hülsenanordnungen 10 kann beispielsweise über ein Drehverfahren erfolgen. Dies ist insbesondere bei einem Substrat 20 aus Werkstoffen wie Aluminium vorteilhaft, die sich schlecht mechanisch umformen lassen.

Alternativ kann die Herstellung der Hülsenanordnung über ein Rundverfahren oder Rollverfahren erfolgen, bei denen ein flaches Substrat 20 in einer Umformmaschine gebogen wird, um den Hohlzylinderformabschnitt 200 zu erzeugen.

Bevorzugt erfolgt die Beschichtung des Substrats 20 an den gewünschten Stellen mit den Funktionsschichten 41, 42 am bereits geformten Substrat 20. Insbesondere bei den mechanischen Umformverfahren besteht die Gefahr, dass im Falle eines bereits beschichteten Substrats 20 eine Beschädigung der Umformmaschinen durch die Hartstoffpartikel 61, 62 erfolgt.

Es wurden Versuche durchgeführt, eine Umformung eines bereits beschichteten flachen Substrats 20 durch eine Verklemmung des Bauteils 82 und des Bauteils 81 mit dazwischen positioniertem Substrat 20 zu erzeugen. Dies hat jedoch nicht zu einem zylindrischen Hohlzylinderformabschnitt 200 geführt, sondern in einer derart hergestellten Hülsenanordnung entstehen Knicke und Abweichungen von der Hohlzylinderform, die zu einer Reduzierung des Reibwerts führen.

Naturgemäß sind im Rahmen der vorliegenden Erfindung vielfältige Abwandlungen und Modifikationen möglich.

Die Durchgangsaussparungen 205, 206 können wie in Fig. 7 gezeigt im Hohlzylinderformabschnitt 200 vorgesehen sein. Sie können alternativ oder zusätzlich an den nach innen oder außen gebogenen Kanten 107, 108 (vgl. Fig. 9) und/oder an dem zum jeweiligen axialen Ende 101, 102 hin verbreiternden Endabschnitt 105, 106 (vgl. Fig. 2) vorgesehen sein. Die letztgenannte Variante ist vorteilhaft, da die Endabschnitte 105, 106 gut greifbar sind.

## Patentansprüche

1. Hülsenanordnung (10) zur reibungserhöhenden Verbindung von einem ersten Bauteil (81) mit einem zylinderförmigen Abschnitt (810) und einem zweiten Bauteil (82) mit einer zylinderförmigen Aussparung (820) zur Aufnahme des zylinderförmigen Abschnitts (810) des ersten Bauteils (81),
wobei die Hülsenanordnung (10) ein erstes axiales Ende (101), ein zweites axiales Ende (102) und einen ersten Schlitz (103) aufweist, wobei der erste Schlitz (103) von dem ersten axialen Ende (101) bis zum zweiten axialen Ende (102) verläuft,
wobei die Hülsenanordnung (10) ein Substrat (20) aufweist,
wobei die Hülsenanordnung (10) zumindest abschnittsweise als Schichtanordnung (40) mit dem Substrat (20), mit einer ersten Funktionsschicht (41) und mit einer zweiten Funktionsschicht (42) ausgebildet ist,
wobei die erste Funktionsschicht (41) auf einer ersten Seite (201) des Substrats (20) und die zweite Funktionsschicht (42) auf einer zur ersten Seite (201) entgegengesetzten zweiten Seite (202) des Substrats (20) angeordnet ist,
wobei die erste Funktionsschicht (41) und die zweite Funktionsschicht (42) jeweils eine metallische Bindephase (51, 52) aufweisen, wobei in der metallischen Bindephase (51, 52) Hartstoffpartikel (61, 62) fixiert sind, wobei das Substrat (20) einen ersten Hohlzylinderformabschnitt (200) aufweist.

2. Hülsenanordnung (10) nach Anspruch 1, bei welcher in dem ersten Hohlzylinderformabschnitt (200) die Schichtanordnung (40) vorgesehen ist.

3. Hülsenanordnung (10) nach einem der vorhergehenden Ansprüche, welche
- am ersten axialen Ende (101),
- am zweiten axialen Ende (102), oder
- am ersten axialen Ende (101) und am zweiten axialen Ende (102)
einen sich zum jeweiligen axialen Ende (101; 102) hin verbreiternden Endabschnitt (105; 106) aufweist.

4. Hülsenanordnung (10) nach einem der vorhergehenden Ansprüche, welche an mindestens einer Kante (107; 108) des ersten Schlitzes (103) nach innen oder nach außen gebogen ist, um über die mindestens eine Kante (107; 108) eine Positionierung der Hülsenanordnung (10) zu ermöglichen.

5. Hülsenanordnung (10) nach einem der vorhergehenden Ansprüche, bei welcher das Substrat (20) zumindest abschnittsweise als metallisches Substrat (20) ausgebildet ist und mindestens einen Werkstoff aufweist aus einer ersten Werkstoffgruppe bestehend aus:
- Federbandstahl,
- Werkzeugstahl,
- Edelstahl,
- Werkstoffnummer 1.4401 EN,
- Werkstoffnummer 1.4301 EN,
- Werkstoffnummer 1.4404 EN,
- Werkstoffnummer 1.4571 EN,
- Werkstoffnummer 1.1248 (DIN, C 75 S),
- Werkstoffnummer 1.1274 (DIN C 100 S),
- Werkstoffnummer 1.1211 (DIN C 60 S),
- Werkstoffnummer 1.0580 (DIN St 52, AISI 1024),
- Werkstoffnummer 1.0347 gemäß DIN EN 10130,
- Werkstoffnummer 1.0338 gemäß DIN EN 10130:1991,
- Aluminium,
- Aluminiumlegierung,
- Nickellegierung,
- Legierung, welche Nickel als Hauptkomponente und Chrom als Nebenkomponente aufweist,
- Titan, und
- Titanlegierung.

6. Hülsenanordnung (20) nach einem der vorhergehenden Ansprüche, bei welcher das Substrat (20) zumindest abschnittsweise als metallisches Substrat ausgebildet ist und eine Bruchdehnung A₈₀ aufweist, welche größer oder gleich einer ersten Bruchdehnung ist aus einer Bruchdehnungsgruppe bestehend aus:
- 30 %,
- 32 %, und
- 34 %.

7. Hülsenanordnung (10) nach einem der vorhergehenden Ansprüche, bei welcher das Substrat (20) eine Dicke (22) aufweist, die in einem vorgegebenen Bereich liegt aus einer Bereichsgruppe bestehend aus:
- Bereich von 100 µm bis 4.000 µm,
- Bereich von 200 µm bis 3.000 µm.

8. Hülsenanordnung (10) nach einem der vorhergehenden Ansprüche, bei welcher die metallische Bindephase (51, 52) mindestens einen Werkstoff aufweist, der ausgewählt ist aus einer zweiten Werkstoffgruppe bestehend aus:
- Nickel,
- Nickellegierung,
- Kupfer,
- Kupferlegierung,
- Cobalt,
- Cobaltlegierung,
- Chrom,
- Chromlegierung,
- Zink,
- Zinklegierung,
- Legierung auf Kuper-Zinn-Basis,
- Legierung auf Nickel-Phosphor-Basis, und
- Legierung auf Nickel-Zinn-Basis.

9. Hülsenanordnung (10) nach einem der vorhergehenden Ansprüche, bei welcher die Hartstoffpartikel (61, 62) mindestens einen Hartstoff aufweisen, der ausgewählt ist aus einer Hartstoffgruppe bestehend aus:
- Diamant,
- kubisches Bornitrid,
- Siliciumnitrid,
- Borcarbid,
- Wolframcarbid,
- Siliciumcarbid,
- Titanborid, und
- Aluminiumoxid.

10. Hülsenanordnung (10) nach einem der vorhergehenden Ansprüche, bei welcher die Hartstoffpartikel (61, 62) eine mittlere Größe aufweisen, die in mindestens einem vorgegebenen ersten Bereich liegt aus einer Bereichsgruppe bestehend aus:
- Bereich von 0,5 µm bis 90 µm,
- Bereich von 2,0 µm bis 70 µm, und
- Bereich von 5 µm bis 60 µm.

11. Hülsenanordnung (10) nach einem der vorhergehenden Ansprüche, welche zwei Durchgangsaussparungen (205, 206) aufweist, um ein Greifen der Hülsenanordnung (10) über ein in die Durchgangsaussparungen (205, 206) eingreifendes Werkzeug zu ermöglichen.

12. Hülsenanordnung (10) nach einem der vorhergehenden Ansprüche, welche einen zweiten Hohlzylinderformabschnitt (207) aufweist, dessen Innendurchmesser (DI2) größer ist als der Innendurchmesser (DI1) des ersten Hohlzylinderabschnitts (200).

13. Hülsenanordnung (10) nach einem der vorhergehenden Ansprüche, welche einen dritten Hohlzylinderformabschnitt (208) aufweist, dessen Innendurchmesser (DI3) kleiner ist als der Innendurchmesser (DI) des ersten Hohlzylinderabschnitts (200).

14. Bauteilanordnung (80) mit einem ersten Bauteil (81), einem zweiten Bauteil (82) und einer Hülsenanordnung (10) nach einem der vorhergehenden Ansprüche,
wobei das erste Bauteil (81) einen zylinderförmigen Abschnitt (810) aufweist,
wobei das zweite Bauteil (82) eine zylinderförmige Aussparung (820) zur Aufnahme des zylinderförmigen Abschnitts (810) des ersten Bauteils (81) aufweist,
wobei der zylinderförmige Abschnitt (810) in der zylinderförmigen Aussparung (820) angeordnet ist, und
wobei die Hülsenanordnung (10) zwischen dem zylinderförmigen Abschnitt (810) und dem zweiten Bauteil (82) angeordnet ist.

15. Verfahren zur Erzeugung einer Bauteilanordnung (80) mit einem ersten Bauteil (81), einem zweiten Bauteil (82) und einer Hülsenanordnung (10) nach einem der Ansprüche 1 bis 13, wobei das erste Bauteil (81) einen zylinderförmigen Abschnitt (810) aufweist und wobei das zweite Bauteil (82) eine zylinderförmige Aussparung (820) zur Aufnahme des zylinderförmigen Abschnitts (810) aufweist, wobei das zweite Bauteil (82) dazu ausgebildet ist, eine Veränderung der zylinderförmigen Aussparung (820) zwischen einem erweiterten Zustand und einem verengten Zustand zu ermöglichen, und wobei das Verfahren folgende Schritte aufweist:
A) Die Hülsenanordnung (10) wird im erweiterten Zustand des zweiten Bauteils (82) zwischen dem ersten Bauteil (81) und dem zweiten Bauteil (82) positioniert; und
B) das zweite Bauteil (82) wird in den verengten Zustand überführt, und hierdurch wird eine Klemmverbindung zwischen dem zweiten Bauteil (82) und dem ersten Bauteil (81) erzeugt, wobei die Hülsenanordnung (10) zumindest abschnittsweise zwischen dem zylinderförmigen Abschnitt (810) und der zylinderförmigen Aussparung (820) angeordnet ist.
